# EUROPÄISCHE PATENTSCHRIFT

(11) **EP 1 386 568 B1**
(45) Veröffentlichungstag und Bekanntmachung des Hinweises auf die Patenterteilung: **26.10.2005**
(21) Anmeldenummer: 03405522.8
(22) Anmeldetag: 10.07.2003
(51) Int. Cl.: A47J 19/02

(54) **Entsafter**
Juice extractor
Centrifugeuse à jus de fruits

(30) Priorität: 30.07.2002 CH 13562002
(43) Veröffentlichungstag der Anmeldung: 04.02.2004
(73) Patentinhaber: Thielmann Rotel Know-How AG, 4663 Aarburg (CH)
(72) Erfinder: Pfluger, Urs, 4600 Olten (CH)
(74) Vertreter: Quehl, Horst Max

(56) Entgegenhaltungen:
- EP-A- 0 684 000

## Beschreibung

Die Erfindung betrifft einen Entsafter mit einer auf den Kupplungsblock eines Motorgehäuses aufgesetzten mitdrehenden Einheit aus kreisrunder Reibscheibe und diese umschliessendem Siebkorb, mit Gehäuseteilen für die Aufnahme und getrennte Ableitung von Saft und Trester, mit einem Deckelteil, der einen Einfüllschacht umschliesst und mit einem in den Einfüllschacht einzuschiebenden Stopfer, wobei die Einheit aus Reibscheibe und Siebkorb durch eine am Deckelteil vorgesehene, für den Kontakt mit dem Zentrum der Reibscheibe bestimmte Anlaufnase in Kupplungsposition am Kupplungsblock gehalten ist.

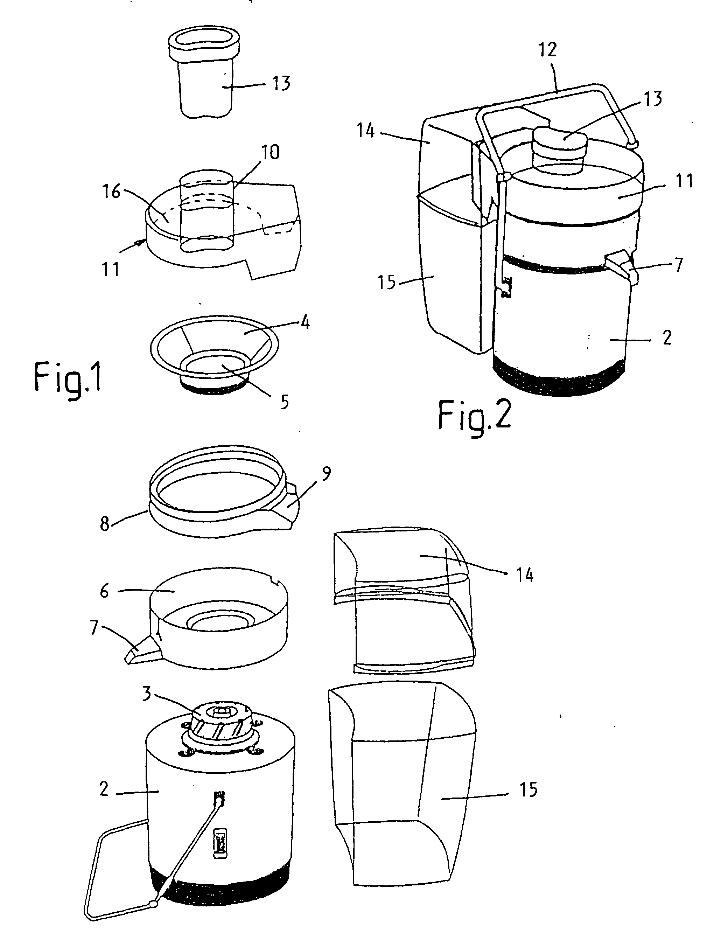

Ein bekannter Entsafter dieser Art ist marktbekannt und in der Gebrauchsanleitung Nr. 42.3 ST der Anmelderin dargestellt und wird im Folgenden in den Fig. 1 und 2 an Hand dieser Darstellungen mit seinen Vor- und Nachteilen beschrieben.

Ein weiterer Entsaftes dieser Art ist in der EP 0 684 000 A dargestellt.

Der Erfindung liegt die Aufgabe zugrunde, ohne Verzicht auf die Vorteile des einfachen Auseinandernehmens und Wiederzusammensetzens der Entsafterteile, einen Entsafter zu finden, der bei einfacher, kompakter und damit preiswerter Herstellung seiner Teile eine Arbeitserleichterung bewirkt, indem er geeignet ist, grössere Obst- oder Gemüseteile zu verarbeiten, so dass diese nur bei besonders grossen Abmessungen, z.B. mit einem Durchmesser von mehr als 7,5 cm, vorgängig zerschnitten werden müssen.

Die Lösung der Aufgabe erfolgt erfindungsgemäss dadurch, dass der freie Querschnitt des Füllschachtes über den Zentrumsbereich der Reibscheibe verläuft, die Anlaufnase an einem Stegteil vorgesehen ist, der sich von der Wand des Füllschachtes in Richtung zu dem Zentrum der Reibscheibe erstreckt und der Stopfer eine Ausnehmung für die Aufnahme des Stegteiles aufweist. Vorteilhafte Ausführungsformen der Erfindung sind Gegenstand der abhängigen Patentansprüche.

Im Folgenden wird die Erfindung anhand der Zeichnungen näher erläutert. Es zeigt:
- Fig. 1: eine Anordnung von Teilen eines Entsafters obengenannter, marktbekannter Ausführung
- Fig.2: den Entsafter nach Fig.1 nach dem Zusammensetzen seiner Teile,
- Fig.3: einen Axialschnitt durch den Deckelteiles eines erfindungsgemässen Entsafters
- Fig.4: einen im Winkel zu ersterem versetzten Axialschnitt des Deckelteiles nach Fig.3,
- Fig.5: einen Axialschnitt durch den oberen Bereich eines für den Füllschacht des Deckelteiles nach Fig.3 und 4 bestimmten Stopfers mit einem Teil der umschliessenden Wand des Füllschachtes un
- Fig.6: einen Axialschnitt durch den Stopfer nach Fig.5 ohne seine Stopferkappe.

Der Entsafter 1 bekannter Ausführung nach Fig.1 und 2 hat ein Motorgehäuse 2, an dessen Oberseite ein vom Motor angetriebener Kupplungsblock 3 zentral angeordnet ist, so dass er für die formschlüssige Kupplung mit einer ausgewuchteten, napfförmigen Einheit aus konischem Siebkorb 4 und einer von diesem umschlossenen und an ihm befestigten Reibscheibe 5 geeignet ist.

Eine schematische Darstellung eines Siebkorbes 4 mit eingesetzter Reibscheibe 5 ist in der DE-A-1157354 zu finden.

Auf das Motorgehäuse 2 sind weiterhin eine Saftschale 6 mit seitlichem Saftablauf 7, ein Gehäusering 8 mit seitlichem Auslass 9 für den aus dem konischen Siebkorb 4 nach oben sich abtrennenden Trester und ein mit dem Einfüllschacht 10 versehener Deckelteil 11 aufgesetzt. Ein entsprechend der Darstellung in Fig.2 nach oben geschwenkter und am Deckelteil 11 eingeraster Tragbügel 12 hält diese Teile in funktionsgerechter Position zusammen. Ein von Hand zu betätigender Stopfer 13, dessen Querschnittsform derjenigen des Einfüllschachtes 10 entspricht, dient dem Andruck des zu entsaftenden Obstes oder Gemüses gegen die den Einfüllschacht 10 unten abschliessende Reibscheibe 5.

Für die Aufnahme des über den Auslass 9 abströmenden Tresters ist neben dem Motorgehäuse 2 ein eine Abdeckhaube 14 aufweisender Tresterbehälter 15 angeordnet.

Bei diesem bekannten Entsafter 1 ist der Einfüllschacht 10 über einem Bereich der Reibscheibe 5 angeordnet, der sich zwischen deren Zentrum und ihrem Umfang befindet, so dass er im Verhältnis zur Grösse der Reibscheibe 5 einen kleinen Aufnahmequerschnitt hat. Da sich folglich ein Umfangsbereich des von der Deckelwand 16 aus nach unten verlaufenden Einfüllschachtes 10 bis in die Nähe des Zentrums der Reibscheibe 5 erstreckt, kann dieser Umfangsbereich dem Niederhalten der Reibscheibe 5 auf dem Kupplungsblock 3 dienen. Hierzu trägt dieser Umfangsbereich des Einfüllschachtes 10 eine eingesetzte Anlaufnase aus einem verschleissfesterem Kunststoff. Auf diese Weise sind besondere, z.B. durch Fliehkrafteinrastung oder Verschraubung wirkende Verbindungsmittel zwischen dem Kupplungsblock 3 und der Reibscheibe 5 überflüssig und die häufig zu Reinigungszwecken erforderliche Zerlegung des Entsafters in seine Einzelteile kann schnell und auf einfache Weise nach Schwenken des Tragbügels erfolgen, indem diese hierzu lediglich von dem Kupplungsblock abgehoben werden. Auch der erneute Zusammenbau kann somit durch einfaches Uebereinandersetzen der Teile 6,8,4,5 und 11 und dabei gegenseitige Ineinandergreifen erfolgen.

Dieser bekannte Entsafter 1 hat den erheblichen Nachteil, dass der Einfüllschacht 10 eine so kleine Querschnittsgrösse aufweist, dass zu entsaftendes Material meist erst nach mehrfachem Zerschneiden in den Einfüllschacht 10 eingebracht werden kann.

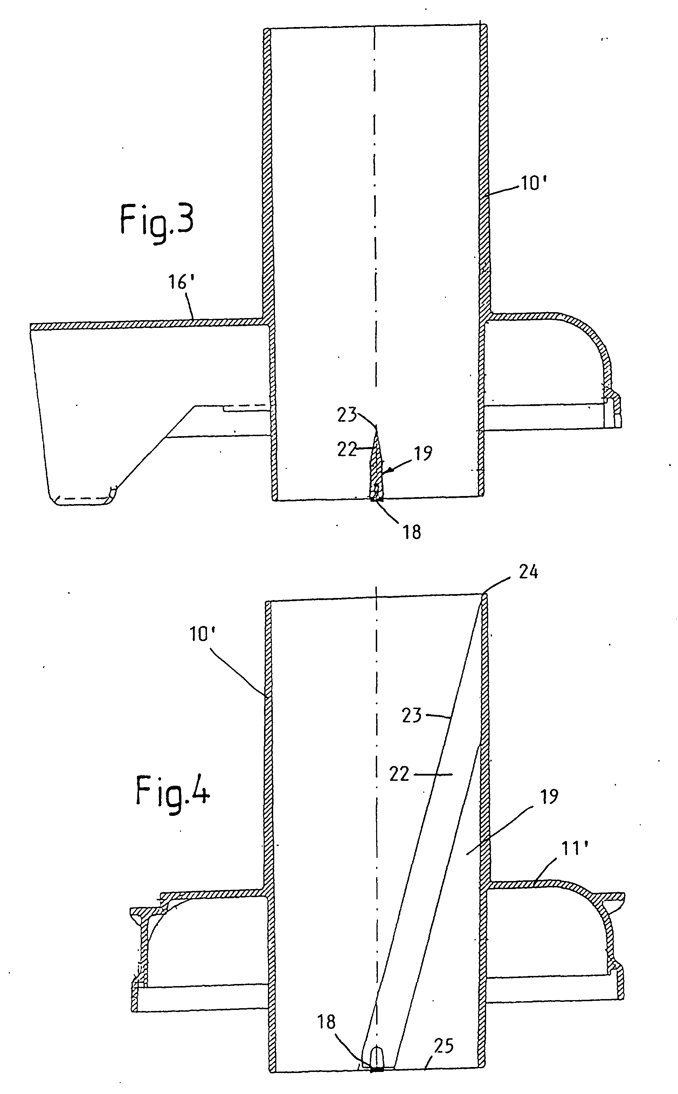

Da der erfindungsgemässe Entsafter sich im Wesentlichen durch die neue Ausführung seines Deckelteiles 11' mit seinem zentralen Füllschacht 10' und dem zugehörigen Stopfer 13' von der beschriebenen bekannten Ausführung unterscheidet, wird die Erfindung im Folgenden anhand der Fig. 3 bis 6 näher beschrieben.

Der Deckelteil 11' hat einen mit der Drehachse des Motorgehäuses 2 und damit der Reibscheibe 5 gleichachsigen, zylindrischen Füllschacht 10', der sich von der Deckelwand 16' bis angrenzend an die in Fig.3 nichtdargestellte Reibscheibe 5 nach unten erstreckt. Ausserdem erstreckt sich der Füllschacht 10' von der Deckelwand 16' aus nach oben, um einen Vorrat an zu entsaftendem Material aufnehmen zu können. Seine Gesamtlänge beträgt auf diese Weise beispielsweise 150 mm. Ausserdem hat der Füllschacht 10' einen Durchmesser, der ausreichend gross ist, um die gesamte wirksame Fläche der Reibscheibe 5 zu umschliessen. Seine Grösse beträgt beispielsweise 75 mm, so dass z.B. auch Aepfel meist ohne vorheriges Zerschneiden in den Füllschacht eingebracht werden können. Ein grösserer Durchmesser ist aus Sicherheitsgründen zu vermeiden.

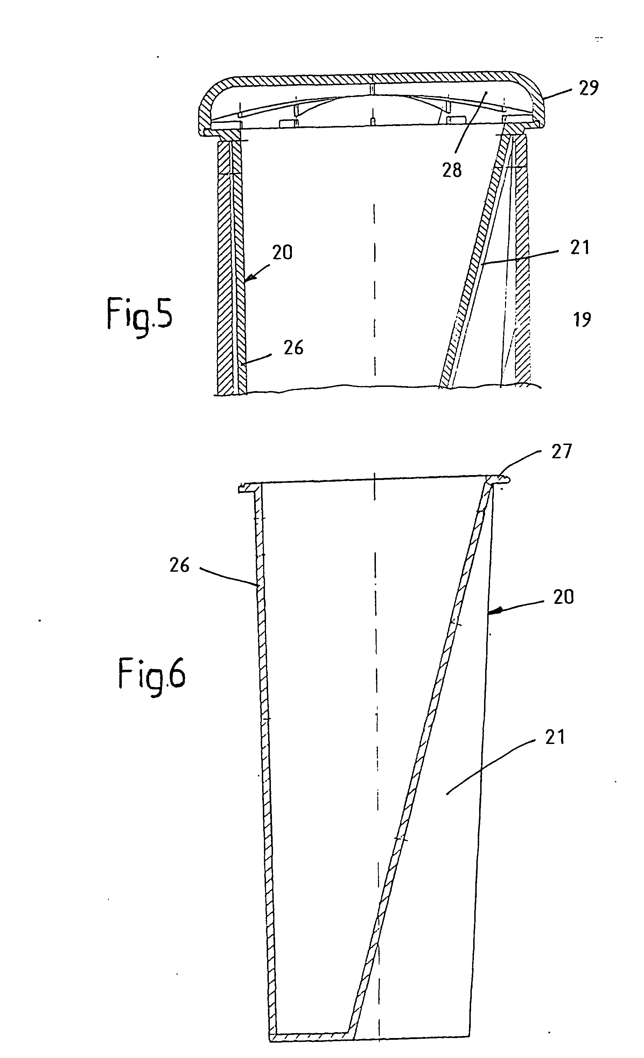

Um trotz der vollständigen Ausnutzung der Grösse der Reibscheibe 5 diese zusammen mit dem Siebkorb 4 durch eine zentrale Anlaufnase 18 in Kupplungskontakt mit dem Kupplungsblock 3 halten zu können, so dass der Entsafter dank einfacher Konstruktion leicht auseinandernehmbar und wieder zusammensetzbar ist, ist ein Stegteil 19 vorgesehen, der von der Wand des Füllschachtes 10' in Richtung zu dem Zentrum der Reibscheibe 5 verläuft, so dass er an seiner unteren Seite die Anlaufnase 18 aufnimmt. Um dennoch den Stopfer 20 bis zu der Reibscheibe 5 in den Füllschacht 10' einschieben zu können, hat dieser eine der Form und dem Verlauf des Stegteiles 19 angepasste schmale Ausnehmung 21, die den Stegteil 19 entsprechend der Teildarstellung der Fig.5 aufnimmt.

Vorzugsweise verläuft die an einem keilförmigen Querschnitt 22 des Stegteiles 19 vorgesehene innere Kante 23 des Stegteiles 19 entsprechend der Darstellung in Fig.4 ausgehend von der Oberkante 24 des Füllschachtes bis kurz über die Mitte der unteren Schachtöffnung 25, um die Anlaufnase 18 an dieser Mitte im Stegteil 19 aufzunehmen. Auf diese Weise kann sich der Stegteil 19 beim Einstopfen z.B. eines Apfels mit geringem Kraftaufwand messerartig in diesen einschneiden. Der Stegteil 19 verhindert auch, dass zu entsaftendes Material im kreiszylindrischen Füllschacht 10' durch die Reibscheibe 5 in eine Umlaufbewegung versetzt wird.

Zur Vereinfachung seiner Herstellung in Kunststoffspritztechnik hat der Stopfer 20 einen Schaftteil 26 mit einem oberen Flanschrand 27, an dem ein durch Rippen 28 verstärkter Kappenteil 29 befestigt ist.

## Patentansprüche

1. Entsafter mit einer auf den Kupplungsblock (3) eines Motorgehäuses (2) aufgesetzten mitdrehenden Einheit aus kreisrunder Reibscheibe (5) und diese umschliessendem Siebkorb (4), mit Gehäuseteilen (6,8) für die Aufnahme und getrennte Ableitung von Saft und Trester, mit einem Deckelteil (11'), der einen Einfüllschacht (10') umschliesst und mit einem in den Einfüllschacht (10') einzuschiebenden Stopfer (20), wobei die Einheit aus Reibscheibe (5) und Siebkorb (4) durch eine am Deckelteil (11') vorgesehene, für den Kontakt mit dem Zentrum der Reibscheibe (4) bestimmte Anlaufnase (18) in Kupplungsposition am Kupplungsblock (3) gehalten ist, **dadurch gekennzeichnet, dass** der freie Querschnitt des Füllschachtes (10') über den Zentrumsbereich der Reibscheibe (5) verläuft, die Anlaufnase (18) an einem messerartigen Stegteil (19) vorgesehen ist, der sich von der Wand des Füllschachtes in Richtung zu dem Zentrum der Reibscheibe (5) erstreckt und der Stopfer (20) eine Ausnehmung (21) für die Aufnahme des Stegteiles (19) aufweist.

2. Entsafter nach Anspruch 1, **dadurch gekennzeichnet, dass** der Stegteil (19) sich mit einer zum Zentrum des Füllschachtes (10') gerichteten Schneidkante (23) in schrägem Verlauf von der Wand des Füllschachtes (10') bis über das Zentrum der unteren Schachtöffnung (25) erstreckt.

3. Entsafter nach Anspruch 2, **dadurch gekennzeichnet, dass** die Schneidkante (23) geradlinig ist und beginnend an der oberen Oeffnungskante (24) des Füllschachtes (10') schräg nach innen verläuft.

## Claims

1. Juicer with a rotating unit mounted on the coupling block (3) of a motor housing (2) consisting of circulation friction disc (5) and screen basket (4) enclosing these, with housing parts (6,8) for the reception and separate extraction of juice and pomace, with a lid (II¹), which encloses a feed throat (10¹) and with a plug (20) to be inserted in the feed throat (10'), wherein the unit consisting of friction disc (5) and screen basket (4) through a thrust nozzle (18) provided on the lid (II¹), meant for the contact with the centre of the friction disc (4) is held in coupling position at the coupling block (3), **characterised in, that** the free cross-section of the filling shaft (10') is over the central area of the friction disc (5), the thrust nozzle (18) is provided on a knife-like rib part (19), which extends from the wall of the filling shaft to the centre the friction disc (5) and the plug (20) has a recess (21) for the reception of the rib part (19).

2. Juicer according to claim 1, **characterised in, that** the rib part (19) extends with a cutting edge (23) aligned to the centre of the filling shaft (10¹) in inclined course of the wall of the filling shaft (10') up to over the centre of the bottom shaft opening (25).

3. Juicer according to claim 2, **characterized in, that** the cutting edge (23) is straight and begins at the top opening edge (24) of the filling shaft (10') inclined inwards.

## Revendications

1. Centrifugeuse comportant une unité co-rotative montée sur le bloc de couplage (3) d'un bloc moteur (2) constituée d'un disque de friction circulaire (5) et d'un panier à tamis (4) entourant celui-ci, comportant des pièces de bloc moteur (6,8) pour recevoir et guider séparément le jus et la pulpe, comportant une pièce de couvercle (II¹), qui renferme un entonnoir (10¹) et comportant un poussoir (20) coulissant à l'intérieur de l'entonnoir, moyennant quoi l'unité constituée du disque de friction (5) et du panier à tamis (4) est maintenue en position de couplage sur le bloc de couplage (3) par un nez de butée (18) prévu sur la pièce de couvercle (II¹), déterminé pour contacter le centre des disques de friction (4), **caractérisée en ce que** la section transversale libre de l'entonnoir (10') s'étend sur la zone centrale du disque de friction (5), le nez de butée (18) est prévu sur une pièce transversale (19) de type lame, qui s'étend de la paroi de l'entonnoir dans le sens du centre du disque de friction (5) et le poussoir (20) présente un évidement pour recevoir la pièce transversale (19).

2. Centrifugeuse selon la revendication 1, **caractérisée en ce que** la pièce transversale (19) s'étend avec une arête de découpage (23) orientée vers le centre de l'entonnoir (10¹) sur un cours horizontal de la paroi de l'entonnoir (10') jusqu'au centre de l'ouverture d'entonnoir (25) inférieure.

3. Centrifugeuse selon la revendication 2, **caractérisé en ce que** l'arête de découpage (23) est en ligne droite et s'étend en diagonale vers l'intérieur à partir de l'arête d'ouverture supérieure (24) de l'entonnoir.
